# EUROPÄISCHE PATENTSCHRIFT

(11) **EP 1 067 992 B1**
(45) Veröffentlichungstag und Bekanntmachung des Hinweises auf die Patenterteilung: **26.11.2003**
(21) Anmeldenummer: 99919153.9
(22) Anmeldetag: 29.03.1999
(51) Int. Cl.: A62B 35/04

(54) **FANGEINRICHTUNG FÜR EIN STEIGSCHUTZSYSTEM**
CATCHING DEVICE FOR A SYSTEM FOR PROTECTING PERSONS WORKING AT HEIGHTS
DISPOSITIF DE RETENUE POUR SYSTEME DE PROTECTION LORS D'ASCENSIONS

(30) Priorität: 30.03.1998 DE 29805788 U
(43) Veröffentlichungstag der Anmeldung: 17.01.2001
(73) Patentinhaber: Christian Dalloz Holding Deutschland GmbH & Co. KG, 95028 Hof (DE)
(72) Erfinder: SKADE, Toralf, D-01237 Dresden (DE); MICKAN, Ronald, D-01640 Coswig (DE)
(74) Vertreter: Gritschneder, Martin, Dipl.-Phys.
(86) Internationale Anmeldenummer: EP9902137
(87) Internationale Veröffentlichungsnummer: WO99049939

(56) Entgegenhaltungen:
- WO-A-95/29738
- WO-A-95/32759
- DE-U- 29 501 716
- FR-A- 2 555 060
- US-A- 5 224 427

## Beschreibung

Die Erfindung betrifft ein Dämpfungselement für eine Fangeinrichtung zur Verhinderung eines Absturzes einer Person von einer Leiter, einem Podest oder dergleichen, wobei die Person durch einen Auffanggurt an der Fangeinrichtung gesichert ist. Das Dämpfungselement ist länglich und hat eine nicht geradlinige Form. Bei einem Absturz wird das Dämpfungselement durch die Fallenergie in eine mehr geradlinige Form verformt, wodurch der Fangstoß gedämpft wird.

Derartige Fangeinrichtungen können einen Schlitten aufweisen, der entlang der Führungsschiene führbar ist, sowie eine Befestigungseinrichtung zum Sichern des Auffanggurts an dem Schlitten, wobei die Befestigungseinrichtung das Dämpfungselement enthält, das bei einem Absturz den Fangstoß dämpft. Bekannt ist eine solche Fangeinrichtung, bei der die Befestigungseinrichtung zur Bildung des Dämpfungselements S-Form hat. Durch die Belastungen und Kräfte, die beim normalen Gebrauch einer solchen Fangeinrichtung auf das Dämpfungselement ausgeübt werden, besteht die Gefahr, daß sich das Dämpfungselement im Laufe der Zeit aus seiner ursprünglichen S-Form in eine mehr gestreckte Form verformt, so daß die Dämpfungsfunktion beeinträchtigt wird.

Aus DE-A-34 26 551 ist eine Fangeinrichtung für ein Steigschutzsystem bekannt, bei der die Befestigungseinrichtung ein etwa nierenförmig eingedellter Stahlring ist, der bei einem Absturz gestreckt wird. Durch die Streckung wird Fallenergie abgebaut und dadurch der Fangstoß gedämpft.

Aus DE-A-26 37 593 ist eine Dämpfungseinrichtung für ein Sicherheitsgeschirr bekannt, die einen mehrfach zickzackförmig gefalteten Abschnitt enthält, der bei einem Absturz ebenfalls einen Teil der Fallenergie aufnimmt und dadurch den Fangstoß dämpft.

Ein Schlitten oder Läufer mit einem Dämpfungselement ist ferner aus DE-U-295 01 716 bekannt. Das Dämpfungselement sitzt hierbei auf einem zapfenförmigen Ansatz einer Sperrklinke und zwischen dem Dämpfungselement und dem Schlitten ist auf dem zapfenförmigen Ansatz ein Querstück gelagert, an dem der Auffanggurt befestigt ist. Bei dieser Fangeinrichtung ist der Dämpfungsweg begrenzt oder würde eine Vergrößerung des Dämpfungsweges zwangsläufig zu einer unhandlichen Größe der Fangeinrichtung führen.

Der Erfindung liegt die Aufgabe zugrunde ein Dämpfungselement für eine Fangeinrichtung zu schaffen, bei dem eine Verformung oder eine Beeinträchtigung der Dämpfungsfunktion durch die im Einsatz normalerweise auftretenden Kräfte und Belastungen vermieden wird.

Erfindungsgemäß wird diese Aufgabe dadurch gelöst, daß das Dämpfungselement in seiner nicht-geradlinigen Form fixiert ist, wobei die Fixierung so bemessen ist, daß sie bei einer bestimmten Belastung das Dämpfungselement freigibt, so daß dieses den Fangstoß dämpfen kann.

Die nicht-geradlinige Form des Dämpfungselements kann bedeuten, daß das Dämpfungselement S- oder U-Form hat, spiralförmig oder eingerollt ist oder in sonstiger Weise gekrümmt oder gebogen ist, so daß es nur durch Kraftanwendung aus dieser nicht-geradlinigen Form in eine geradlinige oder gestreckte Form gebracht werden kann.

Vorzugsweise erfolgt die Fixierung durch Stege, Schweißpunkte, Niete, Bandagen oder Bügel, die so positioniert sind, daß zwischen ihnen und der durch die S-Faltung bewirkten Umbiegung oder sonstigen Krümmung der nicht-geradlinigen Form ein möglichst großer Abstand besteht.

Die erfindungsgemäße Fangeinrichtung kann von der aus DE-U-295 01 761 bekannten Art sein, bei der in dem Schlitten eine Sperrklinke drehbar gelagert ist, die bei einem Absturz gegen Fangrasten in der Führungsschiene läuft, und bei der der Auffanggurt an der Sperrklinke gesichert ist. Statt der Sperrklinke kann auch ein Arretierhebel vorgesehen sein, der bei einem Absturz gegen die Schiene drückt und durch Reibung den Schlitten an der Schiene arretiert.

Bei horizontal verlaufenden Schienen werden im allgemeinen keine Sperrklinken oder Arretierhebel verwendet und kann die Befestigungseinrichtung in einer Öse oder einem an dem Schlitten angelenkten Verbindungsglied bestehen.

Vorzugsweise besteht das Dämpfungselement aus einem einfach oder mehrfach gefalteten oder eingerollten Flachstahl. Durch die Dimensionierung des Flachstahls kann der Fangstoß in seiner Stärke begrenzt werden. Bei einem Absturz dürfen auf die Person maximal 6 kN einwirken. Zur Begrenzung des Fangstosses auf etwa 4 kN hat der Flachstahl einen Querschnitt von 8 x 10,5 mm - Werkstoff Stahl 1.4301. Die Stege zur Fixierung der Form des Dämpfungselements können dabei einen Querschnitt von 0,5 x 8 mm aufweisen.

Während es sich bei den Stegen oder Schweißpunkten um Formfixierungsmittel handelt, die unlösbar mit dem Dämpfungselement verbunden sind, brauchen Fixierungsmittel in Form von Bandagen oder Bügel nicht unlösbar mit dem Dämpfungselement verbunden zu sein. Diese Formfixierungsmittel sind zwar in sich geschlossen, müssen jedoch mit dem Dämpfungselement nicht unlösbar verbunden sein.

Um bei einem Absturz eine Verletzung der Person durch die Stegreste zu verhindern, ist die unmittelbare Umgebung der Stege vertieft, wobei die Vertiefung gegebenenfalls von einem erhöhten Rand umgeben sein kann. Die aufeinandergefalteten Bereiche des Dämpfungselements können sich dadurch in der Umgebung der Stege berühren, so daß die Stegreste sehr kurz sind und nicht über die Kontur des Dämpfungselements vorstehen. Eine andere Möglichkeit besteht darin, seitlich an den Stegen sich überlappende Abdeckungsplättchen vorzusehen, die Stegreste abdecken.

Ausführungsbeispiele der Erfindung werden nachfolgend anhand der Zeichnung erläutert. Es zeigen:
- Fig. 1: einen Schlitten der Fangeinrichtung mit S-förmigem Dämpfungselement von der Seite;
- Fig. 2: eine Sperrklinke des Schlittens mit eingerolltem Dämpfungselement von der Seite und
- Fig. 3: eine Sperrklinke, bei der die Umgebung der Stege so ausgebildet ist, daß die Bruchstellen in die Kontur eingebunden sind.

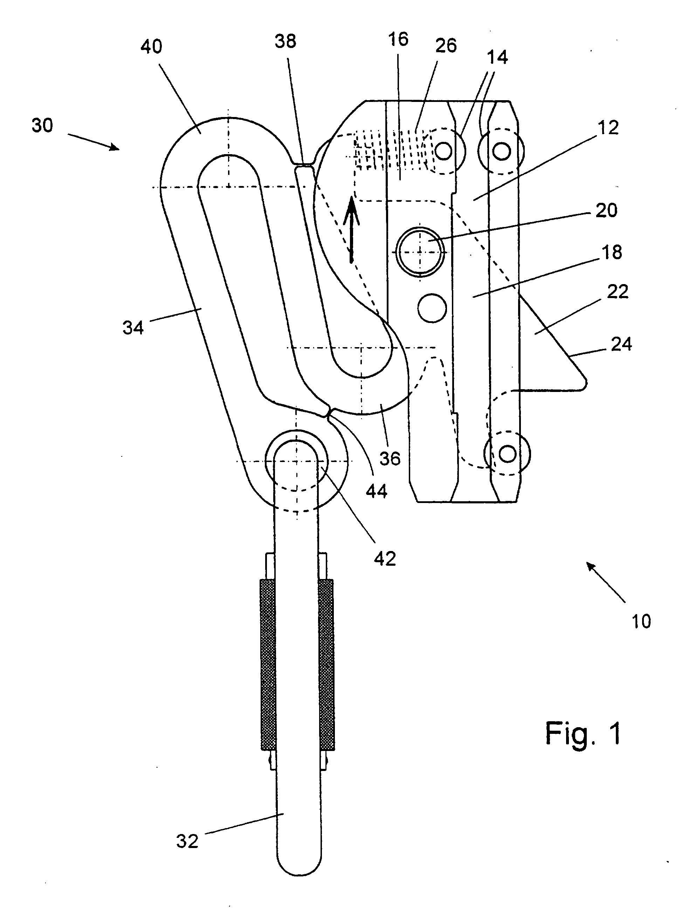

Die in Fig. 1 dargestellte Fangeinrichtung weist einen Schlitten 10 auf, der in einer nicht dargestellten Führungsschiene geführt wird. Die Führungsschiene hat das aus EP-A-0 168 021 bekannte C-Profil, wobei die Öffnungsränder des C-Profils als Führungsflansche dienen. Der Schlitten 10 weist auf beiden Seiten Führungsnuten 12 auf, die die Führungsflansche der Führungsschiene aufnehmen. In den Führungsnuten 12 stehen Führungsrollen 14 vor, die auf der Außenseite und Innenseite der Führungsflansche abrollen.

Der Schlitten 10 weist eine schlitzförmige Durchbrechung 16 auf, in der eine Sperrklinke 18 auf einem Zapfen 20 drehbar gelagert ist. Die Nase 22 der Sperrklinke 18 ragt von dem Schlitten 10 soweit ins Innere des C-Profils der Führungsschiene hinein, daß die Nase 22 gegen die von der Rückseite der Schiene nach innen vorstehenden Fangrasten oder gegen die das C-Profil durchsetzenden Leitersprossen stößt. Der Zapfen 20 befindet sich im oberen Bereich der Sperrklinke 18 und der Rücken 24 der Nase 22 ist vom Zapfenlager nach unten abgeschrägt.

Die Sperrklinke 18 steht unter der Wirkung einer Druckfeder 26, die oberhalb des Zapfenlagers gegen die Sperrklinke 18 drückt, so daß die Nase 22 soweit wie möglich aus dem Schlitten 10 vorsteht. Insoweit entspricht die Konstruktion und die Verwendung des Schlittens 10 dem Schlitten gemäß DE-U-295 01 716, auf die wegen der Einzelheiten verwiesen wird.

An der Sperrklinke 18 ist auf der dem Benutzer zugewandten Seite und unterhalb des Zapfens 20 unter Zwischenschaltung eines Dämpfungselements 30 ein Karabinerhaken 32 befestigt, an dem ein Sicherheits- oder Rettungsgeschirr des Benutzers eingehängt werden.

Das Dämpfungselement 30 wird durch einen Flachstahl 34 gebildet, der S-förmig gebogen oder gefaltet ist und unmittelbar an der Sperrklinke 18 etwas unterhalb des Zapfens 20 beginnt, dort in einer ersten Umbiegung 36 von etwa 180° nach oben gebogen ist und am oberen Ende mittels eines ersten Steges 38 mit dem oberen Ende der Sperrklinke 18 verbunden ist. Dort ist der Flachstahl 34 in einer zweiten Umbiegung 40 von etwa 180° nach unten gebogen, wobei am unteren Ende eine Öse 42 ausgebildet ist, in der der Karabinerhaken 32 hängt. Die Öse ist mittels eines zweiten Steges 44 mit der Außenseite der ersten Umbiegung 36 verbunden. Die Verbindungslinie der Öse 42 mit dem Zapfen 20 bildet einen Winkel von etwa 30° zur Vertikalen.

Die beiden Stege 38 und 44 sind so dimensioniert, daß sie den im normalen Gebrauch auftretenden Kräften standhalten und dadurch den Flachstahl 34 in seiner S-Form fixieren und daß sie im Falle eines Absturzes bei Überschreiten eines bestimmten Wertes des Fangstoßes, im allgemeinen 5 kN, brechen. Sie haben beispielsweise eine Stärke von 0,5 x 8 mm. Der S-förmig gebogene Flachstahl 34 wird dann durch das Gewicht der in das Rettungsgeschirr fallenden Person aufgebogen und nahezu gerade gestreckt. Ein Teil der Fallenergie wird dadurch in Verformungsenergie umgewandelt und der Fangstoß wird gedämpft. Der Flachstahl 34 ist so dimensioniert, daß zu seiner Verformung eine Kraft von etwa 3 bis 5 kN erforderlich ist. Durch das Auffalten des Flachstahls 34 steht ein Weg von 10 cm zur Dämpfung des Fangstoßes zur Verfügung.

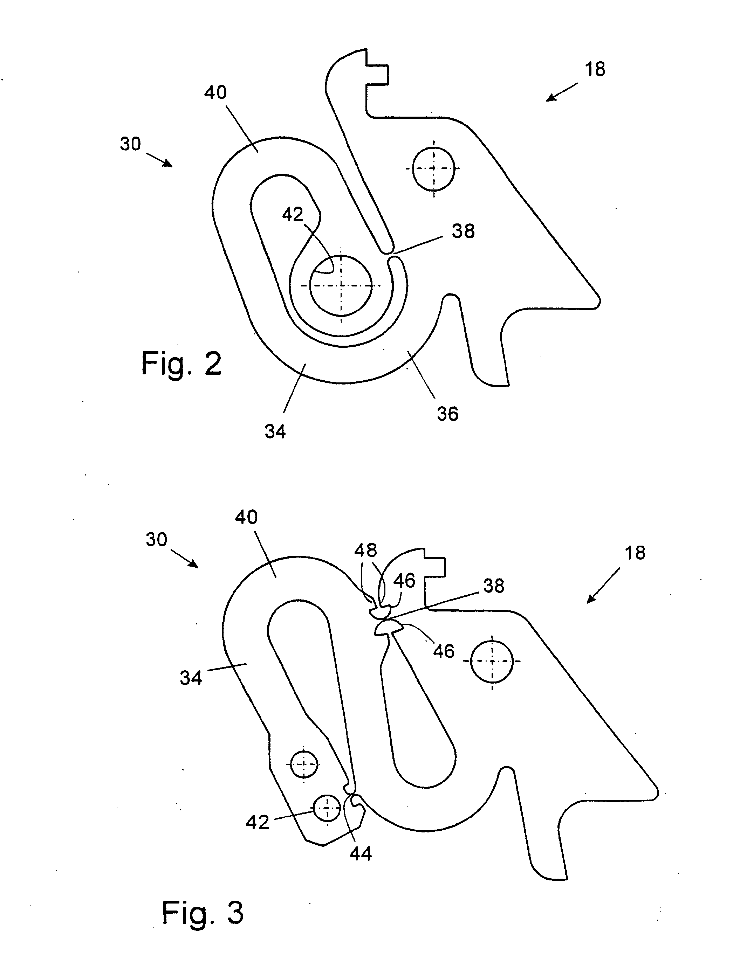

Fig. 2 zeigt nur die Sperrklinke 18 eines Schlittens, der im übrigen dem Schlitten 10 von Fig. 1 entspricht. Zur Bildung des Dämpfungselements 30 ist der Flachstahl 34 in der Zeichnung im Uhrzeigersinn eingerollt. Die erste Umbiegung 36 hat dazu einen größeren Radius und die zweite Umbiegung hat die gleiche Richtung wie die erste Umbiegung 36, so daß die Öse 42 innerhalb der ersten Umbiegung 36 zu liegen kommt.

Fig. 3 zeigt ebenfalls nur die Sperrklinke 18 eines Schlittens, der ansonsten dem von Fig. 1 entspricht. Auch die Form des Dämpfungselements 30 entspricht der von Fig. 1. Die Umgebung der beiden Stege 38 und 44 ist jedoch so ausgebildet, daß die Bruchstellen der Stege in die Kontur des Dämpfungselements 30 eingebunden sind. Vor und nach den Stegen sind dazu Vertiefungen 46 ausgebildet, an die sich erhöhte Ränder 48 anschließen. Die Stege 38, 44 haben dadurch eine definierte Länge und können genau dimensioniert werden, obwohl der Flachstahl 34 in der Umgebung der Stege 38, 44 unmittelbar oder nur mit ganz geringem Abstand an dem oberen Ende der Sperrklinke 18 bzw. der Außenseite der Öse 42 anliegt. Bei einem Bruch der Stege 38, 44 stehen die Bruchstellen dadurch kaum über die Kontur des Dämpfungselements 30 bzw. Flachstahls 34 vor, so daß keine Verletzungsgefahr besteht.

## Patentansprüche

1. Dämpfungselement (30) für eine Fangeinrichtung zur Verhinderung eines Absturzes eines Benutzers von einer Leiter, einem Podest oder dergleichen, wobei der Benutzer durch einen Auffanggurt an der Fangeinrichtung gesichert ist, der mittels einer Befestigungseinrichtung an der Fangeinrichtung gesichert ist, wobei das Dämpfungselement (30) ein nicht-geradlinig geformter Abschnitt der Befestigungseinrichtung ist, und bei einem Absturz den Fangstoß dämpft, **dadurch gekennzeichnet, daß** das Dämpfungselement (30) in der nicht-geradlinigen Form fixiert ist, wobei die Fixierung so bemessen ist, daß sie bei einer bestimmten Belastung das Dämpfungselement (30) freigibt, so daß dieses den Fangstoß dämpfen kann.

2. Dämpfungselement (30) nach Anspruch 1, **dadurch gekennzeichnet, daß** es S-förmig in einer ersten Umbiegung (36) von etwa 180° nach oben und dann in einer zweiten Umbiegung (40) von etwa 180° nach unten gebogen ist und daß die beiden Umbiegungen (36, 40) jeweils durch einen Steg (38, 44) fixiert sind, die jeweils die beiden Schenkel der Umbiegungen (36, 40) verbinden.

3. Dämpfungselement (30) nach Anspruch 1, **dadurch gekennzeichnet, daß** es eine eingerollte Form (Fig. 2) hat, wobei es in einer ersten Umbiegung (36) von etwa 90° nach oben und dann in einer zweiten Umbiegung (40) von etwa 90° mit der gleichen Krümmungsrichtung wie die erste Umbiegung (36) nach unten gebogen ist, so daß das Ende der Befestigungseinrichtung in der ersten Umbiegung (36) zu liegen kommt, wobei die zweite Umbiegung (40) durch einen Steg (38) an der Befestigungseinrichtung fixiert ist.

4. Dämpfungselement (30) nach einem der Ansprüche 1 bis 3, **dadurch gekennzeichnet, daß** die unmittelbare Umgebung der Stege (38, 44) vertieft (46) ist und daß die durch den Steg (38, 44) verbundenen Bereiche der Befestigungseinrichtung keinen oder nur einen geringfügigen Abstand aufweisen.

5. Dämpfungselement (30) nach einem der Ansprüche 1 bis 4, **dadurch gekennzeichnet, daß** die Fixierung so bemessen ist, daß sie bei einer Kraft von ca. 3 bis 5 kN das Dämpfungselement (30) freigibt.

6. Fangeinrichtung für ein Steigschutzsystem zur Verhinderung des Absturzes eines Benutzers von einer Leiter, einem Podest oder dergleichen, wobei der Benutzer durch einen Auffanggurt an der Fangeinrichtung gesichert ist, der mittels einer Befestigungseinrichtung an der Fangeinrichtung gesichert ist, wobei die Befestigungseinrichtung ein Dämpfungselement (30) aufweist, das bei dem Absturz den Fangstoß dämpft, **dadurch gekennzeichnet, daß** das Dämpfungselement gemäß einem der Ansprüche 1 bis 5 ausgebildet ist.

7. Fangeinrichtung nach Anspruch 6, **dadurch gekennzeichnet, daß** die Fangeinrichtung mittels eines Schlittens (10) entlang einer Führungsschiene führbar ist, daß in dem Schlitten (10) eine Sperrklinke (18) drehbar gelagert (20) ist und bei einem Absturz gegen Fangrasten in der Führungsschiene läuft und daß das Dämpfungselement an der Sperrklinke (18) angesetzt ist.

8. Fangeinrichtung nach Anspruch 6, **dadurch gekennzeichnet, daß** die Fangeinrichtung mittels eines Schlittens (10) entlang einer Führungsschiene führbar ist und daß das Dämpfungselement (30) am Schlitten (10) angesetzt ist.

## Claims

1. Damping element (30) for a catching device for preventing a user from falling from a ladder, a landing or similar, the user being secured to the catching device by a catching belt which is secured to the catching device by means of a fastening device, the damping element (30) being a non-rectilinear shaped section of the fastening device, and damping the catching impact in the event of a fall, **characterized in that** the damping element (30) is fixed in the non-rectilinear shape, the fixing being so dimensioned that it. releases the damping element (30) when a certain load is applied, so that it can damp the catching impact.

2. Damping element (30) according to claim 1,
**characterized in that** it is bent upwards in S-shape in a first bend (36) of approx 180° and then downwards in a second bend (40) of approx 180° and the two bends (36, 40) are each fixed by a link (38, 44) which each connect the two arms of the bends (36, 40).

3. Damping element (30) according to claim 1,
**characterized in that** it has a rolled-up shape (Fig. 2), it being bent upwards in a first bend (36) of approx 90° and then downwards in a second bend (40) of approx 90°, with the same curve direction as the first bend (36), so that the end of the fastening device comes to rest in the first bend (36), the second bend (40) being fixed to the fastening device by a link (38).

4. Damping element (30) according to one of claims 1 to 3, **characterized in that** the area immediately surrounding the links (38, 44) is recessed (46) and the areas of the fastening device connected by the links (38, 44) are no, or only a small, distance apart.

5. Damping element (30) according to one of claims 1 to 4, **characterized in that** the fixing is so dimensioned that it releases the damping element (30) at a force of approx. 3 to 5 kN.

6. Catching device for a climbing guard system for preventing a user from falling from a ladder, a landing or similar, the user being secured to the catching device by a catching belt which is secured to the catching device by means of a fastening device, the fastening device having a damping element (30) which damps the catching impact in the event of a fall, **characterized in that** the damping element is developed according to one of claims 1 to 5.

7. Catching device according to claim 6, **characterized in that** the catching device can be guided along a guide rail by means of a carriage (10), a pawl (18) is rotatably housed (20) in the carriage (10) and runs against catching stops in the guide rail in the event of a fall and the damping element is attached to the pawl (18).

8. Catching device according to claim 6, **characterized in that** the catching device can be guided along a guide rail by means of a carriage (10) and the damping element (30) is attached to the carriage (10).

## Revendications

1. Elément d'amortissement (30) pour un dispositif de rattrapage permettant d'empêcher une chute d'un utilisateur à partir d'une échelle, d'une plate-forme ou analogue, l'utilisateur étant rendu solidaire d'une manière assurée du dispositif de rattrapage au moyen d'une ceinture de rattrapage fixée d'une manière assurée au dispositif de rattrapage au moyen d'un dispositif de fixation, l'élément d'amortissement (30) est un segment de forme non rectiligne du dispositif de fixation et amortit le choc de rattrapage lors de la chute, **caractérisé en ce que** l'élément d'amortissement (30) est immobilisé dans la forme non rectiligne, le moyen d'immobilisation étant dimensionné de manière à libérer l'élément d'amortissement (30) lorsqu'il est soumis à une sollicitation déterminée, de sorte que cet élément d'amortissement amortir le choc de rattrapage.

2. Elément d'amortissement (30) suivant la revendication 1, **caractérisé en ce qu'**il est plié en forme de S suivant un premier coude (36) d'environ 180° vers le haut, puis suivant un second coude (40) d'environ 180° vers le bas et **en ce que** les deux coudes (36, 40) sont immobilisés chacun au moyen d'un voile (38, 44) qui relie chaque fois les deux branches du coude (36, 40) respectif.

3. Elément d'amortissement (30) suivant la revendication 1, **caractérisé en ce qu'**il a une forme enroulée sur lui-même (figure 2), en étant plié suivant un premier coude (36) d'environ 90° vers le haut, puis suivant un second coude (40) d'environ 90°, de même sens de courbure que le premier coude (36), vers le bas, de sorte que l'extrémité du dispositif de fixation vient se placer dans le premier coude (36), le second coude (40) étant immobilisé sur le dispositif de fixation au moyen d'un voile (38).

4. Elément d'amortissement (30) suivant l'une des revendications 1 à 3, **caractérisé en ce que** l'environnement immédiat des voiles (38, 44) présente un retrait (46) et **en ce que** les zones du dispositif de fixation qui sont reliées par le voile (38, 44) ne sont pas espacées ou ne présentent qu'un faible espacement.

5. Elément d'amortissement (30) suivant l'une des revendications 1 à 4, **caractérisé en ce que** le moyen d'immobilisation est dimensionné de façon à libérer l'élément d'amortissement (30) pour une force d'environ 3 à 5 kN.

6. Dispositif de rattrapage pour un système de protection d'escalade, permettant d'empêcher une chute d'un utilisateur à partir d'une échelle, d'une plate-forme ou analogue, l'utilisateur étant rendu solidaire d'une manière assurée du dispositif de rattrapage au moyen d'une ceinture de rattrapage fixée d'une manière assurée au dispositif de rattrapage au moyen d'un dispositif de fixation, le dispositif de fixation comprenant un élément d'amortissement (30) amortissant le choc de rattrapage lors de la chute, **caractérisé en ce que** l'élément d'amortissement est réalisé conformément à l'une des revendications 1 à 5.

7. Dispositif de rattrapage suivant la revendication 6, **caractérisé en ce que** le dispositif de rattrapage peut être guidé le long d'un rail de guidage au moyen d'un chariot (10), **en ce que**, dans le chariot (10), un cliquet de blocage (18) est monté à rotation (20) et se déplace, lors d'une chute, vis-à-vis de crans d'arrêt de rattrapage ménagés dans le rail de guidage, et **en ce que** l'élément d'amortissement est monté sur le cliquet de blocage (18).

8. Dispositif de rattrapage suivant la revendication 6, **caractérisé en ce que** le dispositif de rattrapage peut être guidé le long d'un rail de guidage au moyen d'un chariot (10) et **en ce que** l'élément d'amortissement (30) est monté sur le chariot (10).
